# EUROPÄISCHE PATENTSCHRIFT

(11) **EP 1 432 654 B1**
(45) Veröffentlichungstag und Bekanntmachung des Hinweises auf die Patenterteilung: **14.09.2005**
(21) Anmeldenummer: 02785144.3
(22) Anmeldetag: 01.10.2002
(51) Int. Cl.: C03B 5/02

(54) **VERFAHREN UND VORRICHTUNG ZUM SCHMELZEN VON GLAS MITTELS EINEM INDUKTIONSBEHEIZTEN SKULLTIEGEL**
METHOD AND DEVICE FOR MELTING GLASS USING AN INDUCTION-HEATED CRUCIBLE WITH COOLED CRUST
PROCEDE ET DISPOSITIF DE FUSION DU VERRE AU MOYEN D'UN CREUSET A CROUTE REFROIDIE CHAUFFE PAR INDUCTION

(30) Priorität: 02.10.2001 DE 10148754
(43) Veröffentlichungstag der Anmeldung: 30.06.2004
(73) Patentinhaber: Schott AG, 55122 Mainz (DE)
(72) Erfinder: RÖMER, Hildegard, 61184 Karben (DE); LEISTER, Michael, 55257 Budenheim (DE); KOLBERG, Uwe, 55124 Mainz (DE); MENNEMANN, Karl, 65232 Taunusstein (DE); RÄKE, Guido, 55452 Rümmelsheim (DE); SCHÄFER, Ernest, Walter, 55576 Welgesheim (DE); NÜTTGENS, Sybille, 60316 Frankfurt (DE); OHMSTEDE, Volker, 55129 Mainz (DE)
(74) Vertreter: Herden, Andreas F.
(86) Internationale Anmeldenummer: PCT/EP2002/011006
(87) Internationale Veröffentlichungsnummer: WO 2003/031355

(56) Entgegenhaltungen:
- EP-A- 1 078 890
- WO-A-01/14265
- DE-A- 10 138 109
- DE-A- 19 939 785
- DE-C- 10 041 757
- FR-A- 2 561 761
- FR-A- 2 589 228
- GB-A- 627 863
- PETROV YU.B. ET AL.: "Continous casting glass melting in a cold crucible induction furnace" XV INT CONGRESS ON GLASS PROCEEDINGS, Bd. 3A, 1989, Seiten 72-77, XP000075308 LENINGRAD, SU in der Anmeldung erwähnt

## Beschreibung

Die Erfindung betrifft ein Verfahren und eine Vorrichtung zum schnellen Einschmelzen insbesondere hochreiner, aggressiver und hochschmelzender Gläser in einem Skulltiegel, bei welchem zur Beheizung der Schmelze mittels einer den Skulltiegel umgebenden Spulenanordnung Hochfrequenzenergie in den Tiegelinhalt eingekoppelt wird, und das Auflegen des Gemenges und das Abführen des aufgeschmolzenen Glases im oberen Tiegelbereich erfolgen, und unaufgelöste Gemengebestandteile mittels einer gekühlten Brücke, die von oben her wenigstens teilweise in die Schmelze eintaucht, zurückgehalten werden.

Aggressive Gläser mit der Anforderung an hohe Reinheit werden heute diskontinuierlich in Platintiegeln oder kontinuierlich in Platinwannen geschmolzen. Dabei bestehen sowohl die Einschmelzwanne als auch die Läuterwanne und die Homogenisierungswanne aus Platin. Diese Schmelztechnologie ist aufgrund der hohen Kosten des Edelmetalls als auch der kurzen Standzeiten solcher Platinaggregate nachteilig. Insbesondere der Bereich des Einschmelzens, wo Gemengereaktionen ablaufen, ist starker Korrosion ausgesetzt und damit bezüglich der Standzeiten oft das begrenzende Bauteil einer Platinwanne. Bedingt durch die Beheizungstechnologie über die Platinwandung und die Stabilität des Platins sind mit solchen Aggregaten nur maximale Durchsätze von kleiner 1 t pro Tag möglich bei einem Volumen der Einschmelzwanne bzw. -tiegel von 90 l.

Bekannt sind neben Platineinschmelzaggregaten auch sogenannte Skulltiegel, die aus wassergekühlten, beabstandet zueinander angeordneten Metallrohren aufgebaut sind und in denen die Schmelze mittels Induktionsspulen, die den Tiegel umgeben, durch Einstrahlung von Hochfrequenzenergie beheizt wird. Solche Einschmelzaggregate haben den Vorteil, dass sich im Randbereich des Tiegels durch die Wasserkühlung zwangsweise eine Schutzschicht aus arteigenem Material ausbildet, die die Schmelze in Form eines arteigenen Tiegels umgibt und somit vor Verunreinigungen schützt.

Aus PETROV, YU. B. ET AL.: "continuous casting glass melting in a cold crucible induction furnace", XV INTERNATIONAL CONGRESS ON GLASS 1989, PROCEEDINGS, Bd. 3a, 1989, Seiten 72 - 77, ist ein Tiegel der genannten Art zum Einschmelzen hochreiner Gläser bekannt. Bei diesem Tiegel wird das Gemenge im oberen Tiegelbereich zugeführt und das Glas ebenfalls im oberen Tiegelbereich abgezogen. Gemenge und Auslaufbereich sind durch eine gekühlte Brücke, die tief in die Schmelze eintaucht, um unaufgelöste Gemengebestandteile zurückzuhalten, voneinander getrennt. Das aufgeschmolzene Glas wird am oberen Tiegelrand über eine innerhalb der Spule angeordnete Überlaufrinne abgezogen und fällt in Form eines Glasstrangs zwischen Tiegelwandung und Spuleninnenradius nach unten.

Die Schrift gibt keine Auskunft darüber, auf welche Art und Weise der Glasstrang aufgefangen und der Weiterverarbeitung zugeführt wird. Es liegt jedoch auf der Hand, dass bei der beschriebenen Anordnung die Möglichkeiten der Verbindung der Schmelzeinheit mit den weiterverarbeitenden Einheiten sehr beschränkt sind. Zudem ist bei der bekannten Verfahrensführung damit zu rechnen, dass die Glasmenge im Glasstrang zeitlichen Schwankungen unterliegt, so dass allenfalls nur eine quasikontinuierliche Prozessführung möglich ist. Ein weiterer Nachteil ist, dass die Fallhöhe des Glasstrangs sehr groß sein muss, da das Glas wenigstens die gesamte Spulenhöhe durchfallen muss, bevor es in einer außerhalb der Spule angeordneten Rinne oder Wanne aufgefangen werden kann. Als Folge hiervon ist damit zu rechnen, dass Blasen in die Schmelze eingeschlagen werden und die Schlierenqualität verschlechtert wird. Die Abkühlung des Glases im Glasstrang kann weiterhin bei hochschmelzenden Gläsern problematisch sein. Diese Problematik kann darin bestehen, dass das Glas nicht geführt wird und es dadurch zum Spritzen des Glases kommen kann. Weiterhin können elektrische Überschläge zwischen Spule und Glasstrang oder zwischen Glasstrang und Tiegel auftreten, die zur Zerstörung der Spule oder/und des Tiegels führen können.

Aus der Druckschrift FR-A-2 561 761 ist ferner eine Vorrichtung mit einem induktiv geheizten kalten Schmelztiegel zum fortlaufenden Entnehmen von geschmolzenen Substanzen bekannt. Die Schmelze wird über einen Abfluß aus Feeurfestmaterial entnommen. In dem Schmelztiegel ist zudem eine schräg angeordnete, klappbare Rückhalteeinrichtung vor dem Abfluss vorgesehen.

Die Druckschrift FR-A-2 589 228 zeigt eine ähnliche Vorrichtung zur kontinuierlichen Erzeugung von Werkstoffen, die aus Substanzen in geschmolzenem Zustand erhalten werden. Bei dieser Vorrichtung läuft der Werkstoff aus einem kalten Schmelztiegel über eine Rohrleitung oder Rinne kontinuierlich in einen Behälter über.

Die genannten Vorrichtungen sind jedoch insbesondere hinsichtlich der Aufschmelzleistung und der erreichbaren Glasqualität weiter verbesserungswürdig.

Aufgabe der Erfindung ist, ein Einschmelzverfahren bzw. Vorrichtung der bekannten Art so weiterzubilden, dass zur Anbindung der Einschmelzeinheit an die weiterverarbeitenden Stationen einfache, möglichst konventionelle Bauteile verwendet und Beeinträchtigungen der Glasqualität durch eine nach dem Stand der Technik zwingend vorgegebene Verbindungstechnik vermieden werden.

Diese Aufgabe wird mit einem Verfahren nach Anspruch 1 und mit einer Vorrichtung nach Anspruch 8 gelöst.

Es hat sich in überraschender Weise gezeigt, dass es für ein gleichmäßiges Aufschmelzen des Tiegelinhalts nicht unbedingt erforgerlich ist, das gesamte Schmelzvolumen, so wie aus dem Stand der Technik bekannt, innerhalb der Induktionsspule anzuordnen - eine Maßnahme, die im Stand der Technik dazu dienen soll, die Hochfrequenzenergie möglichst gleichmäßig in das gesamte Schmelzvolumen einzutragen, die aber andererseits dazu führt, dass die Verbindung des Schmelztiegels aufgrund der störenden Spulenanordnung mit der nächsten Einheiten der Weiterverarbeitung mit konventionellen Bauteilen nicht möglich ist.

Gemäß der Erfindung ragt der Glasstand in dem Tiegel wenigstens so weit über das obere Ende der Spulenanordnung hinaus, dass der Glasauslauf vollständig oberhalb der Spulenanordnung angeordnet werden kann. Weiterhin ragt das äußere Ende des Glasauslaufs über den Außenradius der Induktionsspule hinaus. Damit ist das Glas, ohne den Spulenbereich zu durchströmen, der Weiterverarbeitung zuführbar. Die Verbindung des Schmelztiegels mit der nächsten Weiterverarbeitungseinheit ist, da keine störenden Spulen im Weg sind, in einfacher und kostengünstiger Weise mit konventionellen Bauteilen möglich. Bezüglich der Auswahl der nachfolgenden Bauteile bestehen keinerlei Beschränkungen, so dass bei der Auswahl einer geeigneten Verbindungstechnik mögliche Beeinträchtigungen der Glasqualität durch die Art der Verbindung gering gehalten werden können.

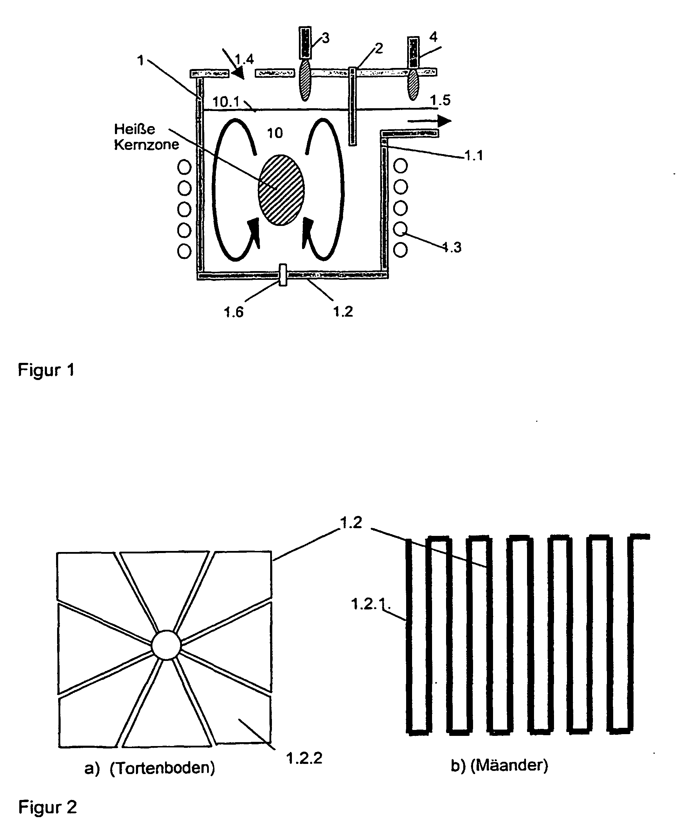

Dass es bei der erfindungsgemäßen Verfahrensführung bzw. Vorrichtung zu keiner nennenswerten Abkühlung der Schmelze oberhalb des Spulenbereichs kommt, überrascht. Eine wesentliche Rolle scheinen hierbei die Beheizungsart und die dadurch induzierten Konvektionsströmungen zu spielen. Durch die Hochfrequenzbeheizung wird die heißeste Zone im Glas mitten im Schmelzvolumen in der Mitte der Spulengeometrie erzeugt. Die Tiegelwände sind dagegen durch die Wasserkühlung kalt. Als Folge hiervon scheint sich eine starke Konvektionswalze auszubilden, die große Wärmemengen aus dem heißen Kern in die oberen kälteren Bereiche des Schmelzvolumens transportiert (siehe hierzu Figur 1). Die Ausbildung der Konvektionswalze kann, wie weiter unten noch erläutert wird, durch zusätzliches Bubbling noch unterstützt werden.

Es hat sich gezeigt, dass dieser Effekt noch durch den Einsatz der gekühlten Brücke verstärkt werden kann. Schmelze, die in den Bereich der gekühlten Brücke gelangt, wird von dieser gekühlt und sinkt nach unten in Richtung Boden ab. Es bildet sich eine Abwärtsströmung aus, die in der Schmelze offensichtlich eine Art "Kälte-" bzw. "Strömungsvorhang" erzeugt. Dieses Verhaltens verstärkt ebenfalls die Umwälzung der gesamten im Schmelzbereich des Tiegels befindlichen Schmelze. Brücken an sich sind in der Schmelztechnik bekannt und werden üblicherweise dazu eingesetzt, unaufgelöste Gemengebestandteile am direkten Durchströmen zum Glasauslauf hin zu hindern. Zusätzlich zu ihrer rein mechanischen Trennwirkung zwischen Einschmelz- und Auslaufbereich trennt die wassergekühlte Brücke gemäß der Erfindung die beiden Bereiche somit auch noch thermisch durch die Ausbildung des beschriebenen "Kälte-" bzw. "Strömungsvorhanges". Die Trennwirkung der Brücke reicht damit viel weiter in das Glasvolumen hinein als es ihren geometrischen Ausmaßen entspricht.

Wesentlich für die Erfindung ist, dass dieser Effekt bereits bei nur geringen Eintauchtiefen der Brücke auftritt. Zu große Eintauchtiefen der gekühlten Brücke könnten bei dem erfindungsgemäßen Verfahren bzw. Vorrichtung, da der obere Bereich des Schmelzvolumens wie auch der Glasauslauf oberhalb des Bereichs der Hochfrequenzenergieeinstrahlung liegen, zum Einfrieren des Glasauslaufs führen.

Nachfolgend wird die Erfindung an Hand der Figuren näher erläutert:

Es zeigen:
- Figur 1: in schematischer Darstellung in einem Vertikalschnitt einen Einschmelztiegel gemäß der Erfindung (mit Darstellung der Konvektionswalzen und der heißen Kernzone);
- Figuren 2a und b: zwei verschiedene Ausführungsformen für die Bodenplatte eines Skulltiegels;
- Figuren 3a,b,c: in schematischer Darstellung in Draufsicht drei bevorzugte Ausführungsformen für die Ausführung und Anordnung der gekühlten Brücke gemäß der Erfindung;
- Figur 4: in schematischer Darstellung in einem Vertikalschnitt eine gekühlte Brücke in einer bevorzugten Ausführungsform;
- Figur 5a,b: in schematischer Darstellung in Vorder- und Seitenansicht die Anordnung der elektrischen Kurzschlussverbindungen im Auslaufbereich;
- Figur 6: in schematischer Darstellung in Draufsicht von oben ein Einschmelztiegel gemäß der Erfindung mit zwei Ausläufen;
- Figur 7a: in schematischer Darstellung in Seitenansicht eine Wanne mit direkter Verbindung zwischen HF-Einschmelztiegel und Platinrinne zur kontinuierlichen Prozeßführung;
- Figur 7b: in schematischer Darstellung in Seitenansicht eine Wanne mit freifallendem Glasstrang zwischen dem HF-Einschmelztiegel und der Platinrinne.

Figur 1 zeigt eine Einschmelzvorrichtung gemäß der Erfindung mit einem Skulltiegel 1. Der Skulltiegel 1 umfasst bei der dargestellten Ausführungsform eine zylindrische Tiegelwandung 1.1.

Nachfolgend werden Details des Tiegelaufbaus beschrieben, die aber zur besseren Übersichtlichkeit in der Figur nicht alle dargestellt sind:

Die Tiegelwandung 1.1 ist aus einem Kranz von vertikalen, oben und unten mäanderartig miteinander verbundenen Metallrohren aufgebaut. Auch der Tiegelboden 1.2 kann aus Metallrohren oder -segmenten bestehen, oder aber auch aus Feuerfestmaterial.

Die Metallrohre sind an wenigstens eine Kühlmittelzufuhr bzw. Kühlmittelabfuhr angeschlossen. In der Regel wird Wasser als Kühlmittel eingesetzt. Die Kühlmittelführung ist gemäß der Anordnung der Metallrohre mäanderförmig. Je nach Tiegelgröße können mehrere Kühlmittelkreisläufe zur Kühlung einzelner Ringsegmente vorgesehen sein. Die Metallrohre sind im Bodenbereich des Tiegels bei kleineren Edelstahl-Tiegeln mit einem Volumen bis zu 50 l beabstandet gehalten und nicht miteinander elektrisch leitend verbunden. Bei Kupfertiegeln können auch größere Tiegel bis 100 l mit beabstandeten Rohren ausgeführt sein. Um einen elektrischen Kurzschluss hier zu verhindern, werden beispielsweise Glimmerplättchen zwischen benachbarten Rohren positioniert. Bei Tiegeln mit sehr großen Schmelzvolumina kann es günstig sein, so wie in der DE 199 39 780.5 A1 beschrieben, auch im Bodenbereich einen elektrischen Kurzschluß der Rohre zusätzlich zu positionieren. Am oberen Tiegelende sind alle Rohre miteinander elektrisch kurzgeschlossen.

Der Boden 1.2 des Skulltiegels 1 ist elektrisch von der Tiegelwandung 1.1 isoliert. Dies wird beispielsweise durch eine Quarzal- oder Glimmerplatte erreicht. Es können hier natürlich auch andere elektrisch nicht leitfähige Materialien verwendet werden. Der Boden 1.2 ist ebenfalls gekühlt und kann, wie in Figur 2 dargestellt, beispielsweise aus mäanderförmig geführten Rohren 1.2.1 bestehen oder aus tortenförmig angeordneten metallischen Stücken 1.2.2 aufgebaut sein. Es liegt auf der Hand, dass die Erfindung nicht auf diese speziellen Ausgestaltungen des Tiegels beschränkt ist. Auch andere Tiegelformen, geometrische Anordnungen der Metallrohre bzw. Ausgestaltungen des Tiegelbodens sind von der Erfindung mit umfasst.

Die Beheizung des Tiegels 1 erfolgt in üblicher Weise durch eine Induktionsspule 1.3, die die Tiegelwandung 1.1 umgibt und über welche Hochfrequenzenergie in den Tiegelinhalt einkoppelbar ist. In dem Tiegel 1 befindet sich die Glasschmelze 10. Die Oberfläche der Glasschmelze 10 ist in Figur 1 mit 10.1 bezeichnet.

Der Tiegel weist einen Einlass 1.4 zum Zuführen von Gemenge und einen Auslauf 1.5 zum Abführen des geschmolzenen Glases auf.

Wesentlich für die Erfindung ist, dass, wie in Figur 1 dargestellt, nur der untere Teil des Tiegels von der Induktionsspule 1.3 umgeben ist. Der Tiegel 1 ist relativ zur Spule 1.3 so angeordnet, dass die Schmelze im Tiegel deutlich aus dem Spulenbereich herausragt, d. h. die Oberfläche 10.1 der Schmelze 10 befindet sich deutlich oberhalb des oberen Endes der Induktionsspule 1.3. Ebenso ist der Glasauslauf 1.5 oberhalb des oberen Spulenendes angeordnet und reicht über den äußeren Radius der Induktionsspule hinaus. Dadurch ist gewährleistet, dass die Schmelze außerhalb des von der Induktionsspule 1.3 umschlossenen Bereichs, d. h. ohne den Spulenbereich zu durchströmen, abgezogen und den Weiterverarbeitungseinheiten zugeführt werden kann. Der Glasauslauf 1.5 kann, da die Verbindungsstelle außerhalb des Induktionsspulenbereichs liegt, in einfacher Weise mittels konventioneller Bauteile mit beliebigen weiterverarbeitenden Einheiten verbunden werden.

Ein weiteres erfindungswesentliches Merkmal ist die Anordnung einer Brücke 2 im oberen Teil des Tiegels 1. Die Brücke 2 taucht wenigstens teilweise in die Schmelze ein und trennt so den Gemengebereich vom Überlauf- und Auslaufbereich. Geringe Eintauchtiefen reichen bereits aus, um den eingangs erwähnten Strömungsvorhang auszubilden.

Die richtige Dimensionierung von Tiegel, Auslauf und Brücke und deren Anordnung relativ zueinander hängt vom Einzelfall ab und kann vom Fachmann jederzeit mittels einiger einfacher Routineexperimente leicht ermittelt werden. Bei einem Skulltiegel mit einem Füllvolumen von 30 l haben sich folgende Werte für die Positionierung der Brücke, der Spule und des Glasauslaufs als günstig erwiesen: Es hat sich als vorteilhaft erwiesen, die Brücke so tief in die Glasschmelze eintauchen zu lassen, dass sich ihr unteres Ende etwa 1 bis 2 cm unterhalb des Bodens des Glasauslaufs 1.5 befindet. Damit ist auf jeden Fall gewährleistet, dass unaufgelöste Gemengebestandteile nicht unter der Brücke durch und zum Auslauf hin strömen können. Dabei sollte sich die Brücke vorteilhafterweise aber immer noch oberhalb der Induktionsspule befinden, vorzugsweise etwa 1 cm. Stärker bevorzugt sollte der Abstand zwischen unterem Ende der Brücke und oberem Ende der Spule 2 cm betragen. Prinzipiell kann das Brückenende auch bis in den Spulenbereich hineinragen. Dabei ist jedoch zu beachten, dass das Hochfrequenzfeld um so mehr verdrängt wird, je tiefer die Brücke in den Spulenbereich eintaucht, mit der Folge, dass die Ankopplung sinkt und die Schmelze im Auslaufbereich einfrieren kann.

Der Glasstand im Auslauf sollte wenigstens 2 cm betragen. Andernfalls besteht auch hier die Gefahr des Einfrierens der Schmelze.

Das äußere Ende des Glasauslaufs sollte mindestens 2 cm über den äußeren Umfang der Spule hinausragen. Wird dieser Wert unterschritten, muss für eine elektrische Isolierung der sich an den Glasauslauf anschließenden Systeme gesorgt werden.

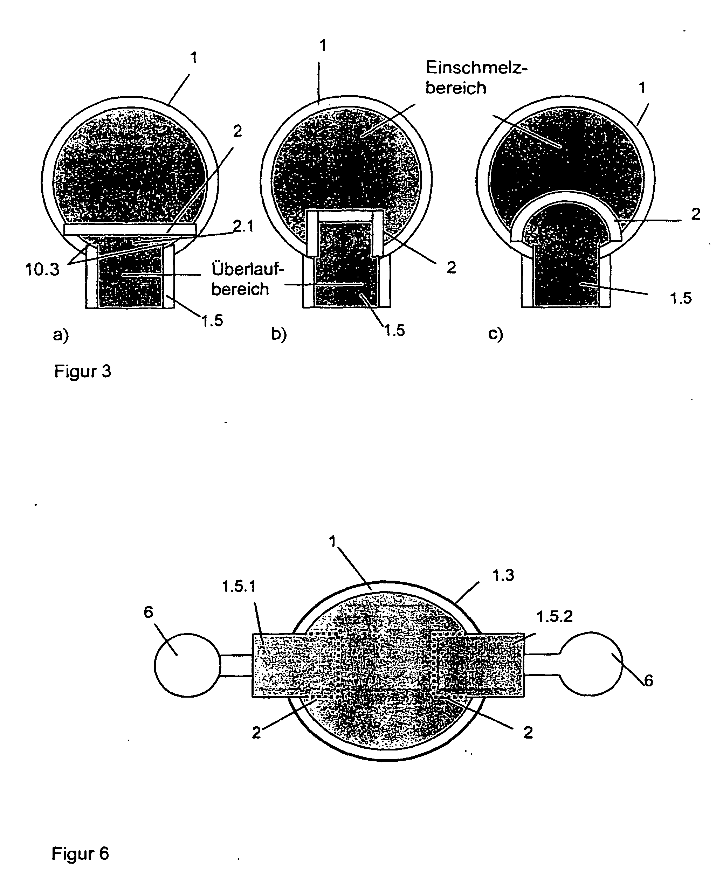

Generell gilt, dass die Geometrie der Brücke 2 variieren kann. Figur 3 zeigt drei verschiedene bevorzugte Ausführungsformen für eine Brücke. Dargestellt sind jeweils in Draufsicht der zylindrische Skulltiegel 1 mit Glasauslauf 1.5 und eine bevorzugte Variante der Brücke 2. Die Brücke 2 kann einen geraden (Figur 3a), eckigen (Figur 3b) oder gebogenen (Figur 3c) Querschnitt aufweisen.

Man erkennt in Figur 3a, dass bei der "geraden" Ausführungsform der Brücke 2 sogenannte "tote" Bereiche 10.3 der Schmelze 10 auftreten, die durch die Brücke vom Einschmelzbereich abgetrennt werden. In diesen toten Bereichen 10.3 ist das Verhältnis von durch die Hochfrequenzstrahlung zugeführter zu durch die Kühlung abgeführter Energie sehr ungünstig und es besteht die Gefahr des Einfrierens der Schmelze. Zudem steht diese Fläche dem Aufschmelzbereich nicht zur Verfügung, was zu Lasten der Schmelzleistung geht. Bei kleinen Tiegeln ist dieser Effekt gering, so dass sich bei diesen Tiegeln der Einfachheit halber dennoch die Verwendung einer geraden Brücke empfiehlt. Geht man zu größeren Schmelzvolumina über (>70 l) ist es zweckmäßig, Maßnahmen zu ergreifen, um diese Bereiche dem Einschmelzbereich wieder zuzuführen. Mögliche Lösungen zeigen die runde und die eckige Brücke der Figuren 3b und c. Die "toten" Bereiche 10.3 sind bei diesen Ausführungsformen deutlich verkleinert, wobei die eckige Variante den Vorteil bietet, dass sie konstruktiv leichter zu realisieren ist.

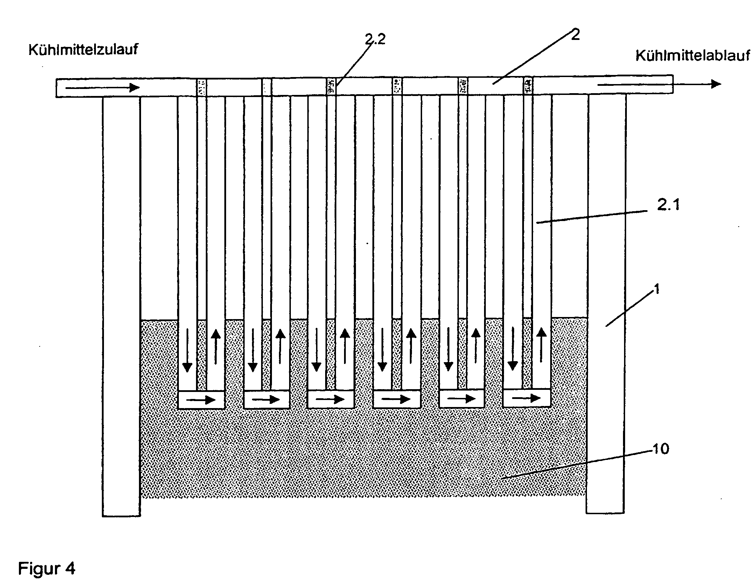

Unabhängig von der speziellen Ausführungsform muss die Brücke 2 ebenfalls wie die gesamte Tiegelwandung 1.1 aus gekühlten, vorzugsweise metallischen Bauteilen aufgebaut sein. Um die Hochfrequenz möglichst wenig zu beeinflussen, ist die Brücke 2 vorzugsweise, so wie in Figur 4 dargestellt, aus einzelnen, in bezug auf die Kühlmittelführung mäanderförmig angeordneten Rohren 2.2 aufgebaut, die an ihre oberen Enden noch elektrisch leitend miteinander verbunden sind. Hier erfolgt auch mit Hilfe eines elektrischen Kontakts (Metallverbindung) zwischen der Brücke und dem restlichen Skulltiegel ein elektrischer Kurzschluss sowohl aller Rohre 2.2 der Brücke 2 bzw. der Brückenteile untereinander als auch mit dem Skulltiegel 1 selbst.

Der Einschmelztiegel 1 und die Brücke 2 können in bevorzugten Ausführungsformen der Erfindung aus Edelstahl, Platin, Kupfer oder Aluminium gefertigt sein. Welches Metall zweckmäßigerweise verwendet wird, hängt von der Zusammensetzung des zu schmelzenden Glases und den Anforderungen an dessen Reinheit ab. Bei Verwendung von Edelstahl oder Kupfer-Skulltiegeln kann die Korrosionsbeständigkeit des Tiegelmaterials auch durch Aufbringen einer Beschichtung aus einem hochtemperaturfesten Kunststoff, dessen Zersetzungstemperatur unterhalb der Temperatur der Beschichtung im Kontaktbereich Beschichtung/Schmelze liegt, verbessert werden. Als Kunststoffmaterialien kommen beispielsweise hochfluorhaltige Kunststoffe, insbesondere PTFE, in Frage. Eine solche Beschichtung hat noch den weiteren Vorteil, dass freiliegende Teile des Tiegels vor dem Angriff durch verdampfende Komponenten aus der Glasschmelze geschützt sind. Die Dicke der Beschichtung ist so zu bemessen, dass die Kühlung durch die Metallrohre noch dazu ausreicht, die Kontakttemperatur zwischen Beschichtung und Schmelze unterhalb der Zersetzungstemperatur des Kunststoffs zu halten. Eine Beschichtung mit Kunststoff hat den weiteren Vorteil, dass ein Anhaften des Glases an den beschichteten Teilen nicht stattfindet und dass die Überschlagsneigung zwischen den metallischen Skullrohren vermindert wird. Ebenso ist es möglich, einen Tiegel aus einem wenig korrosionsbeständigen Metall mit einem Metall mit höherer Korrosionsbeständigkeit zu beschichten.

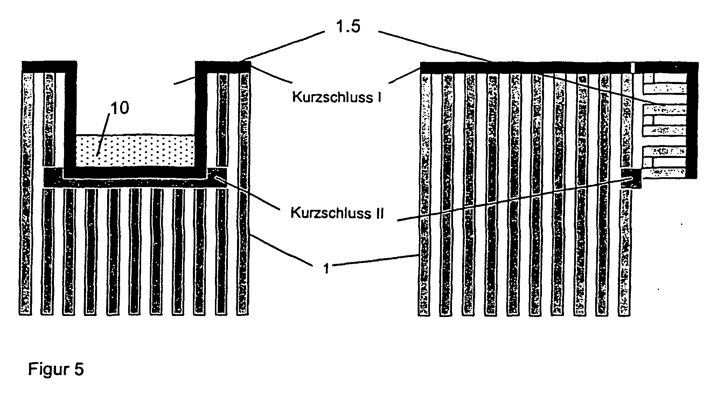

In einer bevorzugten Ausführungsform wird der Auslauf 1.5 durch die im oberen Tiegelbereich um 90° abgeknickten gekühlten Rohre des Skulltiegels gebildet. Diese Rohre werden, wie in Figur 5 dargestellt, an ihrem Ende elektrisch leitend miteinander verbunden, so dass auch der Auslaufbereich einen Kurzschlussring I besitzt, der den Auslauf 1.5 selbst und die Brücke 2 mit umschließt. Es hat sich zudem als günstig erwiesen, zusätzlich eine weitere Kurzschlussstrecke II vorzusehen, die alle um 90° abgeknickten Rohre unterhalb des Auslaufs 1.5 miteinander elektrisch leitend verbindet und jeweils noch die beiden den Auslauf auf beiden Seiten begrenzenden, wieder nach oben geführten Rohre mitumfasst. Auf diese Weise wird die Gefahr von HF-Überschlägen zwischen den abgewinkelten Rohren des Überlaufbereiches und den benachbarten nicht abgewinkelten Rohren der Skulltiegelwand minimiert.

Bei Tiegeln, in denen eine größere Aufschmelzleistung eines Glases (>200 ml/min) erreicht wird, können auch mehrere (zwei bis vier) Ausläufe vorgesehen sein. Eine Ausführungsform mit zwei Ausläufen 1.5.1/1.5.2 zeigt Figur 6. Die Ausläufe 1.5.1 und 1.5.2 liegen sich bei diesem Ausführungsbeispiel diametral gegenüber (180°-Abstand). Dies hat den Vorteil, dass die Homogenisierungseinheiten 6 räumlich möglichst weit voneinander entfernt angeordnet werden können. Auch möglich sind beispielsweise mehrere dichter beieinander liegende Ausläufe (z. B. 90°-Abstand). Diese könnten so nah beieinander angeordnet werden, dass sie mit einer gemeinsamen Brücke vom Gemenge abgeschirmt werden können. Ein Tiegel mit mehreren Ausläufen hat den Vorteil, dass bei einer komplizierten Heißformgebung, die nur geringe Glasdurchsätze verarbeiten kann, eventuell zwei Linien mit einem Tiegel bedient werden können. Diese Möglichkeit ist dann besonders interessant, wenn das Glas nach dem Einschmelzteil keine Läuterung mehr benötigt, da in diesem Fall nur eine zweite Formgebung notwendig ist und keine kostenaufwendige (wegen Pt) Pt-Läuterkammer.

Für eine gute Läuterung des Glases benötigt man eine längere Verweilzeit im Läuteraggregat und dadurch können nur geringere Glasdurchsätze erreicht werden. Die maximale Schmelzleistung des HF-Aggregats kann mit einem Auslauf und einer Läuterkammer nicht ausgenutzt werden, da es an der Leistungsfähigkeit der Läuterkammer fehlen kann. Bei der Verwendung von zwei Ausläufen und entsprechend zwei Läuterkammern kann dieser Nachteil wiederum aufgefangen werden, allerdings sind hier die hohen Pt-Kosten der Läuterkammer mit Nachteilen behaftet. Ebenfalls könnte anstatt mit einer Pt-Läuterkammer mit einem weiteren HF-Aggregat geläutert werden.

Zur Erhöhung des Durchsatzes bzw. der Einschmelzleistung kann entweder die Schmelztemperatur nahezu beliebig erhöht werden, da hier keine Wandkontaktmaterialien als begrenzende Größen vorliegen. Zudem wirkt sich insbesondere bei Glasschmelzen mit hoher Viskosität eine Rührbewegung durch Bubbling günstig auf die Abschmelzleistung aus. Ein solches Bubbling kann in einem Skulltiegel (1) entweder durch wenigstens ein von oben eingesetztes Bubblingrohr oder, so wie in Figur 1 dargestellt, durch im Tiegelboden 1.2 positionierte Bubblingdüsen 1.6 erfolgen.

Eine weitere Beschleunigung der Abschmelzleistung kann durch Einsatz von zusätzlicher Oberhitze im Bereich der Gemengeauflage erreicht werden. Hier kann entweder, wie in Figur 1 gezeigt, ein Brenner 3 oder aber auch eine elektrische direkte oder indirekte Beheizung eingesetzt werden.

Wird ein Brenner zur Erzeugung der Oberhitze verwendet, so kann es hilfreich sein, den Skulltiegel als Pilzskull, so wie er in der DE 199 39 772 C2 beschrieben ist, deren Offenbarung hiermit vollinhaltlich miteinbezogen wird, auszubilden. Bei dieser Ausführungsform werden die gekühlten Metallrohre des Skulltiegels im oberen Tiegelbereich unterhalb der Schmelzoberfläche in die Horizontale abgebogen, so dass sie einen gekühlten Kragen kurz unterhalb der Schmelzoberfläche bilden. Die Temperatur der Schmelze nimmt im Bereich des Kragens nach außen hin ab. Die Glasschmelze kann dabei im Randbereich des Kragens so weit abgekühlt werden, dass auf diesen Rand als Fortsetzung der Tiegelwandung im oberen Tiegelbereich ein Ring aus Feuerfestmaterial aufgesetzt werden kann. Bei dieser Anordnung sind die gekühlten Metallrohre auf der der Schmelze zugewandten Seite vollständig mit Glasschmelze bedeckt und damit gegen die korrodierende Wirkung der Brennerabgase bzw. der Verdampfungsprodukte aus der Schmelze geschützt. Im Gegenzug verhindert die Glasschmelze auf den gekühlten Rohren, dass der Oberofenraum durch die Tiegelrohre zu stark abgekühlt wird.

In einer weiteren bevorzugten Ausführungsform der Erfindung wird im Überlauf- bzw. Auslaufbereich zusätzlich Oberhitze eingesetzt, um eine zu starke Abkühlung der Schmelze in diesem Bereich zu verhindern und den Glasfluss sicherzustellen. Für die Ausgestaltung des Tiegels 1 mit mehreren Ausläufen 1.5 ist es vorteilhaft, auch jeweils in den zusätzlichen Ausläufen Oberhitze einzubringen, um einen kontinuierlichen Gasfluss aus allen Ausläufen zu ermöglichen. Die Oberhitze kann, so wie in Figur 1 dargestellt, mittels Brenner 4 erzeugt werden.

In einer weiteren bevorzugten Ausführungsform der Erfindung wird vor jedem einzelnen Auslauf 1.5 eine Brücke 2 angeschlossen. Diese Brücken 2 werden zweckmäßigerweise so gestaltet, dass die Fläche aller "toten" Bereiche 10.3 zusammen möglichst klein gehalten wird, um den Hochfrequenzeintrag in ein möglichst großes Schmelzvolumen und damit eine möglichst hohe Abschmelzrate des Gemenges zu gewährleisten. Es sind aber ohne weiteres auch Ausführungsformen denkbar, bei denen eine durchgehende Brücke für mehrere Ausläufe vorgesehen ist.

Die für den speziellen Anwendungsfall günstigste Zahl an Ausläufen, deren Positionierung im oberen Tiegelbereich, die Verwendung einer gemeinsamen oder mehrerer Brücken, sowie die geometrische Gestalt der Brücke(n) hängen vom Einzelfall ab und können vom Fachmann ohne erfinderisches Zutun leicht ermittelt werden.

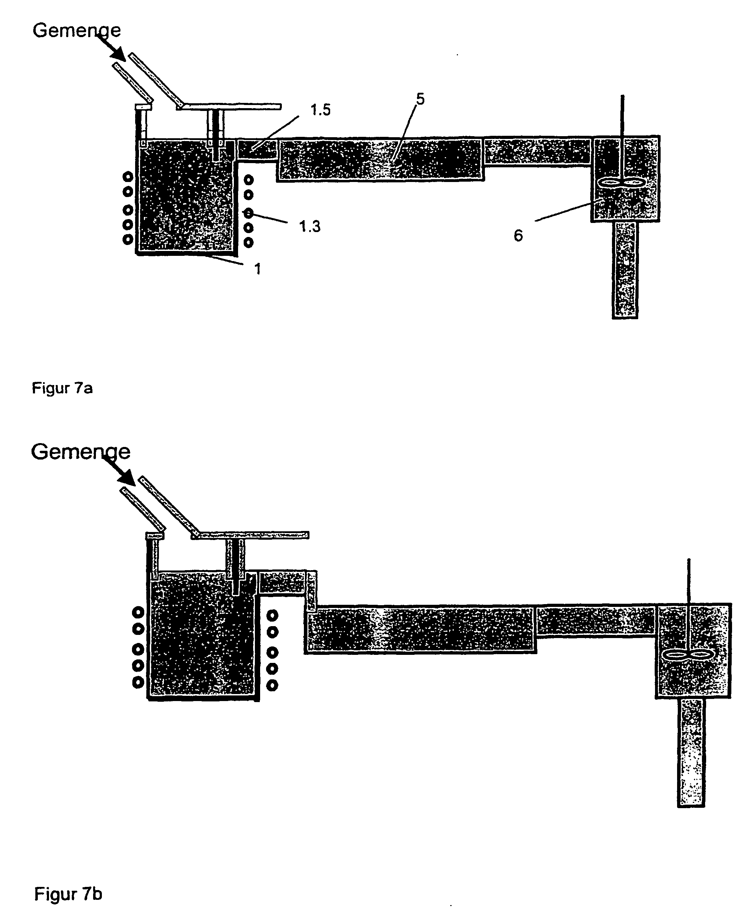

Figur 7a zeigt einen Einschmelztiegel 1 gemäß der Erfindung in Kombination mit einer Platin-Läuter- 5 und Homogenisierungseinheit 6. Eine solche Anordnung kann beispielsweise als kontinuierliche Schmelzwanne für aggressive, hochreine Gläser eingesetzt werden. Hierbei sind verschiedene Möglichkeiten des Glasübergangs zwischen Einschmelztiegel 1 und Platinläuterkammer 5 denkbar. So kann die Platinläuterkammer 5 beispielsweise direkt an den metallischen Kurzschlussring am äußeren Ende des Glasauslaufs 1.5 des Einschmelztiegels 1 angeflanscht werden. In einer weiteren bevorzugten Ausführungsform fällt die Schmelze, so wie in Figur 7b dargestellt, in Form eines Glasstrangs frei in die Platinläuterkammer 5 und es gibt keine direkte Verbindung zwischen dem Einschmelztiegel 1 und der nachfolgenden Läuterkammer 5 und der Homogenisierungsvorrichtung 6. Die Fallhöhe des Glases kann hierbei, da im Gegensatz zur bekannten Vorrichtung, keine Spulenwindungen im Weg sind, so klein gewählt werden, dass der Einschlag von Blasen und die Ausbildung von Schlieren sich in tolerierbaren Grenzen halten.

Für extreme Anforderungen an Reinheit und insbesondere an Platinfreiheit empfiehlt es sich, Glasschmelzanlagen zu verwenden, in welchen zusätzlich zu dem erfindungsgemäßen Einschmelztiegel noch weitere hochfrequenzbeheizte Wannen, Tiegel bzw. Rinnen eingesetzt werden, beispielsweise eine Hochfrequenz-Läuterrinne, so wie in DE 199 39 782 A1, DE 199 39 784 A1 oder in DE 199 39 786 A1 beschrieben oder ein Hochfrequenz-Läutertiegel, so wie aus DE 199 39 772 C1 bekannt, die alle hiermit vollinhaltlich in die vorliegende Offenbarung miteinbezogen werden.

Werden keine allzu hohen Anforderungen an innere Qualität des Glases (Blasen, Schlieren) gestellt - dies trifft zum Beispiel für Lotgläser zu - kann der erfindungsgemäße Einschmelztiegel ohne weitere Zusatzbauteile (Läuter-, Homogenisierungstiegel) zum Einschmelzen des Glases verwendet werden.

### Ausführungsbeispiel: Einschmelzen hochschmelzender Alumosilicatgläser

In einem erfindungsgemäßen Einschmelztiegel, so wie in Figur 1 dargestellt, aus Inconel 600® wurde ein Alumosilicatglas (P1280) DE 19939771.6
mit der Zusammensetzung SiO₂=65,0 Gew.-%; Al₂O₃=22,0 Gew.-%; Li₂O=3,75 Gew.-%; Na₂O=0,5 Gew.-%; BaO=2,0 Gew.-%; MgO=0,5 Gew.-%; TiO₂=2,5 Gew.-%; ZnO=1,75 Gew.-%; ZrO₂=1,7 Gew.-% und V₂O₅=0,3 Gew.-% geschmolzen.

Das effektive Schmelzvolumen im Tiegel betrug ca.25 l. Es wurde eine gekühlte Brücke gemäß der in Figur 4 bzw. Figur 3a dargestellten Ausführungsform verwendet. Die Eintauchtiefe der Brücke in der Schmelze betrug bei einem Glasstand im Glasauslauf von ca. 30 mm etwa 50 mm, d. h. die Unterkante der Brücke lag ca. 20 mm unterhalb des Bodens des Glasauslaufs. Damit wurde gewährleistet, dass keine unaufgelösten Gemengereste unter der Brücke hindurch zum Glasauslauf strömen konnten.

Einschmelztiegel, Brücke und Glasauslauf waren analog zu der in Figur 5 dargestellten Ausführungsform miteinander elektrisch kurzgeschlossen.

Das Glas wurde bei einer HF-Frequenz von 386 kHz bei Generatorleistungen von ca. 250 kW geschmolzen. Zusätzlich wurde die Aufschmelzleistung im Einschmelzbereich durch einen Brenner und Bubbling mit Sauerstoff unterstützt. Das geschmolzene Glas wurde gemäß der Erfindung oberhalb der Induktionsspulenanordnung abgezogen und, ohne den Spulenbereich zu durchlaufen, der Weiterverarbeitung zugeführt. Dies wurde dadurch realisiert, dass der Boden des Glasauslaufs 30 mm oberhalb des oberen Endes der Induktionsspulenanordnung lag. Weiterhin ragte das äußere Ende des Glasauslaufs ca. 70 mm über den äußeren Spulenradius hinaus.

Da es aufgrund der hohen Viskosität solcher Gläser größerer Querschnitte und Durchsätze oder höherer Temperaturen im Überlaufbereich bedarf, wurde zur Unterstützung des Ausströmverhaltens ein Brenner in diesem Bereich eingesetzt.

Die Einschmelzleistung des Schmelzaggregates lag bei dem genannten Schmelzvolumen von 25 l zwischen 0,5 und 2 t Glas/Tag und war damit deutlich höher als bei den eingangs erwähnten konventionellen Schmelzverfahren (1,0 t Glas/Tag bei einem Schmelzvolumen von 90 l).

## Patentansprüche

1. Verfahren zum schnellen Einschmelzen insbesondere hochreiner, aggressiver und/oder hochschmelzender Gläser in einem Skulltiegel,
bei welchem zur Beheizung der Schmelze mittels einer den Skulltiegel umgebenden Spulenanordnung Hochfrequenzenergie in den Tiegelinhalt eingekoppelt wird,
und das Auflegen des Gemenges und das Abführen des aufgeschmolzenen Glases im oberen Tiegelbereich erfolgen,
und unaufgelöste Gemengebestandteile mittels einer gekühlten Brücke, die in die Schmelze eintaucht, zurückgehalten werden,
**dadurch gekennzeichnet,**
**dass** das Glas oberhalb der Spulenanordnung (1.3) abgezogen und ohne den Spulenbereich zu durchströmen der Weiterverarbeitung zugeführt wird und
eine aus an ihren oberen Enden elektrisch leitend miteinander verbundenen Rohren (2.2) aufgebaute Brücke verwendet wird.

2. Verfahren nach Anspruch 1,
**dadurch gekennzeichnet,**
**dass** das Glas in einem kontinuierlichen Prozess aus dem Glasauslauf (1.5) ausströmt in ein fest mit dem Glasauslauf (1.5) verbundenes Bauteil der nachfolgenden Verarbeitungsstufe.

3. Verfahren nach Anspruch 1,
**dadurch gekennzeichnet,**
**dass** das Glas am Glasauslauf (1.5) überströmt und in Form eines Glasstrangs nach unten fällt.

4. Verfahren nach wenigstens einem der Ansprüche 1 bis 3,
**dadurch gekennzeichnet,**
**dass** die Glasschmelze während des Aufschmelzens gerührt wird.

5. Verfahren nach wenigstens einem der Ansprüche 1 bis 4,
**dadurch gekennzeichnet,**
**dass** die Glasschmelze über mehrere Ausläufe (1.5.1, 1.5.2) abgezogen wird.

6. Verfahren nach wenigstens einem der Ansprüche 1 bis 5
**dadurch gekennzeichnet,**
**dass** im Gemengebereich und/oder im Überlauf bzw. Auslaufbereich zusätzlich Oberhitze zum Aufheizen der Glasschmelze eingesetzt wird.

7. Verfahren nach wenigstens einem der Ansprüche 1 bis 6,
**dadurch gekennzeichnet,**
**dass** das Glas im Anschluss an das Einschmelzen geläutert und homogenisiert oder aber direkt einer Formgebungseinheit zugeführt wird.

8. Vorrichtung zum schnellen Einschmelzen insbesondere hochreiner, aggressiver und/oder hochschmelzender Gläser mit
einem Skulltiegel, der von einer Mehrzahl von gekühlten Metallrohren gebildet wird, die in gegenseitigen Abständen angeordnet sind,
einer den Skulltiegel umgebenden Spulenanordnung zum Einkoppeln von Hochfrequenzenergie in den Tiegelinhalt, Einrichtungen zum Auflegen von Gemenge und zum Abführen des aufgeschmolzenen Glases, die im oberen Tiegelbereich angeordnet sind,
und einer gekühlten Brücke, die in die Schmelze eintaucht und das Gemenge von der Einrichtung zum Abführen des Glases trennt,
**dadurch gekennzeichnet,**
**dass** die Einrichtung zum Abführen des geschmolzenen Glases ein Glasauslauf (1.5) ist, der oberhalb der Spulenanordnung (1.3) angeordnet ist und dessen äußeres Ende über den Außenradius der Induktionsspule (1.3) hinausragt und
die Brücke aus Rohren (2.2) aufgebaut ist, die an ihren oberen Enden elektrisch leitend miteinander verbunden sind.

9. Vorrichtung nach Anspruch 8,
**dadurch gekennzeichnet,**
**dass** der Glasauslauf (1.5) durch die im Auslaufbereich um vorzugsweise 90° nach außen hin abgeknickten gekühlten Rohre des Skulltiegels (1) gebildet wird, wobei die Rohrenden über den äußeren Radius der Spulenanordnung (1.3) hinausragen.

10. Vorrichtung nach Anspruch 9,
**dadurch gekennzeichnet,**
**dass** die Rohrenden des Glasauslaufs (1.5) um wenigstens 2 cm über den äußeren Radius der Spulenanordnung (1.3) hinausragen.

11. Vorrichtung nach wenigstens einem der Ansprüche 8 bis 10,
**dadurch gekennzeichnet,**
**dass** der Boden des Glasauslaufs (1.5) wenigstens 2 cm oberhalb des oberen Endes der Spulenanordnung (1.3) liegt.

12. Vorrichtung nach wenigstens einem der Ansprüche 8 bis 11,
**dadurch gekennzeichnet,**
**dass** die Brücke (2) wenigstens 1 cm tief in die Schmelze eingetaucht ist.

13. Vorrichtung nach wenigstens einem der Ansprüche 8 bis 12,
**dadurch gekennzeichnet,**
**dass** die Brücke (2) so angeordnet ist, dass ihr unteres Ende bis ca. 1 - 2 cm unterhalb des Bodens des Glasauslaufs (1.5) in den Skulltiegel (1) hineinragt.

14. Vorrichtung nach wenigstens einem der Ansprüche 8 bis 13,
**dadurch gekennzeichnet,**
**dass** die Brücke (2) aus vertikal nebeneinander angeordneten gekühlten Rohren (2.1) besteht, die an ihren oberen und unteren Enden so miteinander verbunden sind, dass der Kühlmittelfluss durch die Rohre (2.1) mäanderförmig ist.

15. Vorrichtung nach wenigstens einem der Ansprüche 8 bis 14,
**dadurch gekennzeichnet,**
**dass** die Brücke (2) in Draufsicht von oben geradlinig, rund oder eckig ausgebildet ist.

16. Vorrichtung nach wenigstens einem der Ansprüche 8 bis 15,
**dadurch gekennzeichnet,**
**dass** der Skulltiegel (1) mehrere Glasausläufe (1.5) besitzt, wobei entweder jedem Auslauf (1.5) jeweils eine Brücke (2) zugeordnet ist oder aber eine einzige gemeinsame Brücke (2) den gesamten Auslaufbereich mit den mehreren Ausläufen (1.5) vom Gemengebereich abtrennt.

17. Vorrichtung nach Anspruch wenigstens einem der Ansprüche 8 bis 16,
**dadurch gekennzeichnet,**
**dass** die Rohre des Skulltiegels (1) und der Brücke (2) aus Metall bestehen.

18. Vorrichtung nach Anspruch 17,
**dadurch gekennzeichnet,**
**dass** die Metallrohre des Glasauslaufs (1.5) an ihren äußeren Enden mit einem Kurzschlussring versehen sind.

19. Vorrichtung nach wenigstens einem der Ansprüche 17 und 18,
**dadurch gekennzeichnet,**
und dass zwischen Glasauslauf (1.5) und Brücke (2) eine elektrisch leitende Verbindung besteht.

20. Vorrichtung nach wenigstens einem der Ansprüche 17 bis 19,
**dadurch gekennzeichnet,**
**dass** die den Glasauslauf (1.5) bildenden abgeknickten Rohre des Skulltiegels (1) unterhalb des Knicks untereinander und mit den jeweils ersten dem Glasauslauf (1.5) benachbarten, nicht abgeknickten, nach oben geführten Rohren des Skulltiegels kurzgeschlossen sind.

21. Vorrichtung nach wenigstens einem der Ansprüche 8 bis 20,
**dadurch gekennzeichnet,**
**dass** als Rühreinrichtung wenigstens ein von oben in den Skulltiegel (1) eingesetztes Bubblingrohr und/oder am Tiegelboden (1.2) angeordnete Bubblingdüsen (1.6) vorgesehen sind.

22. Vorrichtung nach wenigstens einem der Ansprüche 8 bis 21,
**dadurch gekennzeichnet,**
**dass** im Oberofenraum im Gemengebereich und/oder im Überlauf bzw. Auslaufbereich Einrichtungen zur Erzeugung von Oberhitze vorgesehen sind.

23. Vorrichtung nach Anspruch 22,
**dadurch gekennzeichnet,**
**dass** diese Einrichtungen Gasbrenner (3,4) sind.

24. Vorrichtung nach Anspruch 22 oder 23,
**dadurch gekennzeichnet,**
**dass** der Skulltiegel (1) als Pilztiegel ausgebildet ist.

25. Vorrichtung nach wenigstens einem der Ansprüche 8 bis 24,
**dadurch gekennzeichnet,**
**dass** dem Einschmelztiegel (1) eine Läuter- (5) und eine Homogenisierungseinheit (6) oder direkt eine Formgebungseinheit nachgeschaltet ist.

26. Vorrichtung nach Anspruch 25,
**dadurch gekennzeichnet,**
**dass** die Läutereinheit (5) und/oder Homogenisierungseinheit (6) als hochfrequenzbeheizte Skull-Rinne oder hochfrequenzbeheizter Skull-Tiegel ausgebildet sind.

## Claims

1. Method for rapid melting, in particular of high-purity, aggressive and / or high-melting glasses in a skull crucible,
in which for the purpose of heating the melt by means of a coil arrangement surrounding the skull crucible high-frequency power is introduced into the contents of the crucible
and the application of the batch and the removal of the molten glass take place in the upper region of the crucible,
and constituents of the batch which have not melted are retained by means of a cooled bridge which is immersed in the melt,
**characterised in that**
the glass is withdrawn above the coil arrangement (1.3) and is added for further processing without flowing through the coil region and
a bridge is used which comprises tubes which are electrically conductively connected to each other at their upper ends.

2. Method according to Claim 1,
**characterised in that**
the glass flows out of the glass outlet (1.5) in a continuous process into a part of the subsequent processing stage which is securely connected to the glass outlet (1.5).

3. Method according to Claim 1,
**characterised in that**
the glass flows over the glass outlet (1.5) and falls downwards in the form of a glass strand.

4. Method according to at least one of the Claims 1 to 3, **characterised in that**
the glass melt is stirre during melting.

5. Method according to at least one of the Claims 1 to 4, **characterised in that**
the glass melt is removed by a plurality of outlets (1.5.1, 1.5.2).

6. Method according to at least one of the Claims 1 to 5, **characterised in that**
overheat is additionally used in the batch region and / or in the overflow or outlet region for the purpose of heating the glass melt.

7. Method according to at least one of the Claims 1 to 6, **characterised in that**
the glass is refined and homogenised following the melting or, but directly, added to a casting unit.

8. Device for the rapid melting, in particular of high-purity, aggressive and / or high-melting glasses having
a skull crucible which is formed by a plurality of cooled metal tubes which are arranged spaced apart from each other,
a coil arrangement surrounding the skull crucible for introducing high-frequency power into the contents of the crucible,
apparatuses for applying the batch and removing the molten glass which are arranged in the upper region of the crucible,
and a cooled bridge which is immersed in the melt and separates the batch from the apparatus for removing the glass,
**characterised in that**
the apparatus for removing the molten glass is a glass outlet (1.5) which is arranged above the coil arrangement (1.3) and whose outer end projects over the outer radius of the induction coil (1.3) and
the bridge comprises tubes (2.2) which are electrically conductively connected to each other at their upper ends.

9. Device according to Claim 8,
**characterised in that**
the glass outlet (1.5) is formed by the cooled tubes of the skull crucible (1) bent outwards by preferably 90° in the outlet region and the ends of the tube project over the outer radius of the coil arrangement (1.3).

10. Device according to Claim 9,
**characterised in that**
the tube ends of the glass outlet (1.5) project at least 2 cm over the outer radius of the coil arrangement (1.3).

11. Device according to at least one of the Claims 8 to 10,
**characterised in that**
the bottom of the glass outlet (1.5) lies at least 2 cm above the upper end of the coil arrangement (1.3).

12. Device according to at least one of the Claims 8 to 11,
**characterised in that**
the bridge (2) is immersed at least 1 cm deep in the melt.

13. Device according to at least one of the Claims 8 to 12,
**characterised in that**
the bridge (2) is arranged in such a way that its lower end projects as far as about 1 - 2 cm below the bottom of the glass outlet (1.5) into the skull crucible (1).

14. Device according to at least one of the Claims 8 to 13,
**characterised in that**
the bridge comprises cooled tubes (2.1) arranged vertically next to each other and which are connected to each other at their upper and lower ends in such a way that cooling agent flows through the tubes (2.1) in a meandering manner.

15. Device according to at least one of the Claims 8 to 14,
**characterised in that**
the bridge (2) is formed, as seen from above, in a straight line or in round or rectangular form.

16. Device according to at least one of the Claims 8 to 15,
**characterised in that**
the skull crucible (1) has a plurality of glass outlets (1.5), either one bridge (2) being assigned to each outlet (1.5) or, however, a single common bridge (2) separating the entire outlet region with the plurality of outlets (1.5) from the batch region.

17. Device according to at least one of the Claims 8 to 16,
**characterised in that**
the tubes of the skull crucible (1) and the bridge (2) are made from metal.

18. Device according to Claim 17,
**characterised in that** the metal tubes of the glass outlet (1.5) are equipped at their outer ends with a short-circuit ring.

19. Device according to at least one of the Claims 17 and 18,
**characterised in that**
there is an electrically conductive connection between the glass outlet (1.5) and the bridge (2).

20. Device according to at least one of the Claims 17 to 19,
**characterised in that**
the bent tubes of the skull crucible (1) forming the glass outlet (1.5) are short-circuited below the bend between themselves and with the first tubes of the skull crucible guided upwards, not bent and adjoining the glass outlet (1.5).

21. Device according to at least one of the Claims 8 to 20,
**characterised in that**
at least one bubbling tube inserted from above into the skull crucible and / or bubbling nozzles (1.6) arranged on the bottom of the crucible (1.2) are provided as agitating apparatus.

22. Device according to at least one of the Claims 8 to 21,
**characterised in that**
apparatuses for producing overheat are provided in the upper furnace area in the batch region and / or in the overflow or outlet region.

23. Device according to Claim 22,
**characterised in that**
these apparatuses are gas burners (3, 4).

24. Device according to Claim 22 or 23,
**characterised in that**
the skull crucible (1) is formed as a mushroom crucible.

25. Device according to at least one of the Claims 8 to 24,
**characterised in that**
after the melting crucible (1) there is a purifying unit (5) and a homogenising unit (6) or a casting unit directly.

26. Device according to Claim 25,
**characterised in that**
the purifying unit (5) and / or homogenising unit (6) are formed as a high-frequency heated skull channel or high frequency heated skull crucible.

## Revendications

1. Procédé de fusion rapide, notamment de verres de grande pureté, corrosifs et/ou à point de fusion élevé, dans un creuset à croûte refroidie,
dans lequel, pour chauffer la masse fondue au moyen d'un dispositif de bobines entourant le creuset à croûte refroidie, on introduit de l'énergie à haute fréquence dans le contenu du creuset,
et le chargement du mélange et l'évacuation du verre fondu ont lieu dans la zone supérieure du creuset,
et les éléments de mélange non dissous sont retenus au moyen d'un pont refroidi qui plonge dans la masse fondue,
**caractérisé en ce que**
le verre est retiré au-dessus du dispositif de bobines (1.3) et est amené au dispositif de transformation suivant sans traverser la zone de bobines, et
l'on utilise un pont constitué de tubes (2.2) reliés entre eux de manière électriquement conductrice à leurs extrémités supérieures.

2. Procédé selon la revendication 1,
**caractérisé en ce que**
le verre s'écoule, en un processus continu, de l'orifice d'écoulement du verre (1.5) à une pièce de l'étape de transformation suivante reliée solidairement à l'orifice d'écoulement du verre (1.5).

3. Procédé selon la revendication 1,
**caractérisé en ce que**
le verre déborde par l'orifice d'écoulement du verre (1.5) et tombe vers le bas sous la forme d'un cordon de verre.

4. Procédé selon l'une au moins des revendications 1 à 3,
**caractérisé en ce que**
l'on remue la fonte de verre pendant le processus de fusion.

5. Procédé selon l'une au moins des revendications 1 à 4,
**caractérisé en ce que**
la fonte de verre est retirée par l'intermédiaire de plusieurs orifices d'écoulement (1.5.1, 1.5.2).

6. Procédé selon l'une au moins des revendications 1 à 5,
**caractérisé en ce que**
l'on apporte, dans la zone du mélange et/ou dans le trop-plein ou la zone d'écoulement, de la chaleur zénithale supplémentaire pour chauffer la fonte de verre.

7. Procédé selon l'une au moins des revendications 1 à 6,
**caractérisé en ce que**,
à la suite de la fusion, on affine et on homogénéise le verre ou bien on l'amène directement à une unité de façonnage.

8. Dispositif de fusion rapide, notamment de verres de grande pureté, corrosifs et/ou à point de fusion élevé, comportant :
un creuset à croûte refroidie qui est formé par une pluralité de tubes métalliques refroidis qui sont disposés à distance les uns des autres,
un dispositif de bobines entourant le creuset à croûte refroidie et servant à introduire de l'énergie à haute fréquence dans le contenu du creuset,
des dispositifs de chargement du mélange et d'évacuation du verre fondu qui sont disposés dans la zone supérieure du creuset,
et un pont refroidi qui plonge dans la masse fondue et qui sépare le mélange, du dispositif d'évacuation du verre, et
**caractérisé en ce que**
le dispositif d'évacuation du verre fondu est un orifice d'écoulement du verre (1.5) qui est disposé au-dessus du dispositif de bobines (1.3) et dont l'extrémité extérieure dépasse du rayon extérieur de la bobine d'induction (1.3) et
le pont (2.2) est constitué de tubes qui sont reliés entre eux, de manière électriquement conductrice, à leurs extrémités supérieures.

9. Dispositif selon la revendication 8,
**caractérisé en ce que**
l'orifice d'écoulement du verre (1.5) est formé par les tubes refroidis du creuset à croûte refroidie (1) qui, dans la zone d'écoulement, sont courbés vers l'extérieur, de préférence de 90°, les extrémités des tubes faisant saillie par rapport au rayon extérieur du dispositif de bobines (1.3).

10. Dispositif selon la revendication 9,
**caractérisé en ce que**
les extrémités des tubes de l'orifice d'écoulement du verre (1.5) dépassent d'au moins 2 cm du rayon extérieur du dispositif de bobines (1.3).

11. Dispositif selon l'une au moins des revendications 8 à 10,
**caractérisé en ce que**
le fond de l'orifice d'écoulement du verre (1.5) se trouve au moins 2 cm au-dessus de l'extrémité supérieure du dispositif de bobines (1.3).

12. Dispositif selon l'une au moins des revendications 8 à 11,
**caractérisé en ce que**
le pont (2) est immergé à au moins 1 cm de profondeur dans la masse fondue.

13. Dispositif selon l'une au moins des revendications 8 à 12,
**caractérisé en ce que**
le pont (2) est disposé de telle sorte que son extrémité inférieure pénètre dans le creuset à croûte refroidie (1) jusqu'à environ 1 à 2 cm au-dessous du fond de l'orifice d'écoulement du verre (1.5).

14. Dispositif selon l'une au moins des revendications 8 à 13,
**caractérisé en ce que**
le pont (2) est constitué de tubes refroidis (2.1) qui sont disposés côte à côte verticalement et qui sont reliés entre eux par leurs extrémités supérieures et inférieures de telle sorte que le flux de liquide de refroidissement passe de manière sinueuse à travers les tubes (2.1).

15. Dispositif selon l'une au moins des revendications 8 à 14,
**caractérisé en ce que**,
vu en plan par le dessus, le pont (2) est rectiligne, rond ou anguleux.

16. Dispositif selon l'une au moins des revendications 8 à 15,
**caractérisé en ce que**
le creuset à croûte refroidie (1) possède plusieurs orifices d'écoulement du verre (1.5), auquel cas, soit un pont (2) est associé à chaque orifice d'écoulement (1.5), soit un pont commun unique (2) assure une séparation entre l'ensemble de la zone d'écoulement comportant les différents orifices d'écoulement (1.5), d'une part, et la zone du mélange, d'autre part.

17. Dispositif selon l'une au moins des revendications 8 à 16,
**caractérisé en ce que**
les tubes du creuset à croûte refroidie (1) et du pont (2) sont faits de métal.

18. Dispositif selon la revendication 17,
**caractérisé en ce que**
les tubes métalliques de l'orifice d'écoulement du verre (1.5) sont munis d'une bague de court-circuit à leurs extrémités extérieures.

19. Dispositif selon l'une au moins des revendications 17 et 18,
**caractérisé en ce que**
il y a une liaison électriquement conductrice entre l'orifice d'écoulement du verre (1.5) et le pont (2).

20. Dispositif selon l'une au moins des revendications 17 à 19,
**caractérisé en ce que**
les tubes courbés formant l'orifice d'écoulement du verre (1.5) du creuset à croûte refroidie (1) sont court-circuités, au-dessous du coude, entre eux et chaque fois avec les premiers tubes du creuset à croûte refroidie, non courbés et dirigés vers le haut, qui sont voisins de l'orifice d'écoulement du verre (1.5).

21. Dispositif selon l'une au moins des revendications 8 à 20,
**caractérisé en ce que**
il est prévu, en tant que dispositif de remuage, au moins un tube d'insufflation de bulles introduit par le haut dans le creuset à croûte refroidie (1) et/ou des buses d'insufflation de bulles (1.6) disposées au fond (1.2) du creuset.

22. Dispositif selon l'une au moins des revendications 8 à 21,
**caractérisé en ce que**
il est prévu des dispositifs de production de chaleur zénithale dans l'espace supérieur du four dans la zone du mélange et/ou dans le trop-plein ou la zone d'écoulement.

23. Dispositif selon la revendication 22,
**caractérisé en ce que**
ces dispositifs sont des brûleurs à gaz (3, 4).

24. Dispositif selon la revendication 22 ou 23,
**caractérisé en ce que**
le creuset à croûte refroidie (1) est réalisé sous forme de creuset-champignon.

25. Dispositif selon l'une au moins des revendications 8 à 24,
**caractérisé en ce que**
il y a, en aval du creuset de fusion (1), une unité de raffinage (5) et une unité d'homogénéisation (6) ou directement une unité de façonnage.

26. Dispositif selon la revendication 25,
**caractérisé en ce que**
l'unité de raffinage (5) et/ou l'unité d'homogénéisation (6) sont réalisées sous forme de goulotte à croûte refroidie chauffée à haute fréquence ou de creuset à croûte refroidie chauffé à haute fréquence.
